# EUROPÄISCHE PATENTANMELDUNG

(11) **EP 0 537 455 A1**
(43) Veröffentlichungstag der Anmeldung: **21.04.1993**
(21) Anmeldenummer: 92114816.9
(22) Anmeldetag: 29.08.1992
(51) Int. Cl.: B65D 65/38, B65B 61/02, B29C 59/04, C08J 5/18

(54) **Stretchfolie aus thermoplastischem Kunststoff für Verpackungszwecke**

(30) Priorität: 25.09.1991 DE 4131916
(71) Anmelder: KARL DICKEL & Co. KG, D-47057 Duisburg (DE)
(72) Erfinder: Dickel, Karl Heinz, W-4100 Duisburg-Rahm (DE)
(74) Vertreter: Andrejewski, Walter, Dr.

(57) **Zusammenfassung**

Stretchfolie aus thermoplastischem Kunststoff für Verpackungszwecke, insbesondere zur Palettensicherung. Die Stretchfolie weist eine Kennzeichnung auf. Sie erfährt bei der Verpackung eines Gegenstandes eine Stretchdehnung und umschließt den verpackten Gegenstand unter Stretchspannung. Die Kennzeichnung ist als Fließtextur ausgebildet, die aus zumindest einer Oberfläche der Stretchfolie erhaben vorsteht. Die Fließtextur ist so eingerichtet, daß sie im stretchgedehnten Zustand der Stretchfolie wahrnehmbar ist.

## Beschreibung

Die Erfindung betrifft eine Stretchfolie aus thermoplastischem Kunststoff für Verpackungszwecke, insbesondere zur Palettensicherung, wobei die Stretchfolie eine Kennzeichnung aufweist und bei der Verpackung eines Gegenstandes eine Stretchdehnung erfährt sowie den verpackten Gegenstand unter Stretchspannung umschließt. - Unter Palettensicherung versteht man eine Verpackungsmaßnahme, bei der auf einer Palette aufliegende, z. B. gestapelte Gegenstände, von der Stretchfolie in der beschriebenen Weise umschlossen werden, um die auf der Palette aufliegenden Gegenstände oder Stapel beim Transport und bei der Manipulation gegen Verrutschen, Entstapeln oder ähnliche Störungen zu sichern.

Eine Verstreckungsfolie kann aus den verschiedensten, für Verpackungsfolien üblichen thermoplastischcn Kunststoffen bestehen. Im allgemeinen besteht sie aus einem thermoplastischen Kunststoff mit niedriger Schmelzviskosität, z. B. aus Polyethylen, Polypropylen, Polyamid, Polyvinylclorid oder dergleichen. Besonders bewährt haben sich Stretchfolien aus linearem Polyethylen. Ihre Dicke liegt vorzugsweise im Bereich von 15 bis 35 µm.

Bei der bekannten Stretchfolie, von der die Erfindung ausgeht, besteht die Kennzeichnung aus einer Bedruckung, die auf die fertige Stretchfolie aufgebracht wird. Eine solche Kennzeichnung genügt weitgehend den Anforderungen, ist jedoch wegen der geringen Adäsion der üblichen Druckfarben auf der Oberfläche von thermoplastischem Kunststoff und mit einfachen Hilfsmitteln vorsätzlich zu entfernen. Das stört, und zwar insbesondere dann, wenn es sich bei den Kennzeichnungen um Herkunftsangaben oder Warenzeichen handelt und die Kennzeichnungen, z. B. aus Recyclinggründen, langfristig und unzerstörbar lesbar sein sollen. Zu den bekannten Maßnahmen gehört in verfahrenstechnischer Hinsicht, daß die Kennzeichnung mit besonderen Druckeinrichtungen auf die fertigen Stretchfolien aufgebracht wird. - Grundsätzlich ist es auch bekannt, in Kunststoffolien mit prägenden Werkzeugen kennzeichnende Einprägungen einzubringen, die auf Materialverdrängung beruhen und gleichsam Kerben darstellen. Bei einer Stretchfolie können Kennzeichnungen auf diese Weise nicht erzeugt werden, weil unter der Stretchspannung im stretchgedehnten Zustand an den Kerben Kerbspannungen auftreten, die die Festigkeit beeinträchtigen und von deren Risse ausgehen.

Der Erfindung liegt die Aufgabe zugrunde, eine Stretchfolie der eingangs beschriebenen Zweckbestimmung sowie des eingangs beschriebenen Aufbaus zu schaffen, die eine langfristig lesbare und praktisch nicht entfernbare Kennzeichnung aufweist. Der Erfindung liegt fernerhin die Aufgabe zugrunde, ein Verfahren anzugeben, mit dem eine solche Stretchfolie auf einfache Weide hergestellt werden kann.

Zur Lösung dieser Aufgabe lehrt die Erfindung, daß die Kennzeichnung als Fließtextur ausgebildet ist, die aus zumindest einer Oberfläche der Stretchfolie erhaben vorsteht, und daß die Fließtextur so eingerichtet ist, daß sie im stretchgedehnten Zustand der Stretchfolie wahrnehmbar ist. Unter wahrnehmbar wird verstanden, daß die Kennzeichnung im auffallenden oder durchfallenden Licht sichtbar ist und auch ertastet oder erfühlt werden kann, ggf. mit entsprechenden meßtechnischen Hilfsmitteln.

Im Rahmen der Erfindung bezeichnet der Ausdruck Textur im Zusammenhang mit einer Kunststoffolie eine nicht regellose, sondern einzelne Richtungen und Ebenen statistisch bevorzugende Orientierung oder Ansammlung von Molekülen des Kunststoffes. Fließtextur bezeichnet eine Textur, die sich in dem thermoplastifizierten Kunststoff durch Fließen ausgebildet hat und danach gleichsam eingefroren worden ist. Überraschenderweise bleibt auch in einer dünnen oder sehr dünnen Stretchfolie, deren Dicke z. B. im Bereich von 15 bis 35 µm liegt, eine Fließtextur, die aus zumindest einer Oberfläche der Stretchfolie ausreichend erhaben vorsteht, wahrnehmbar, wenn die Stretchfolie beim Verpacken des Gegenstandes eine übliche Stretchdehnung im Bereich von 100 bis 250 %, vorzugsweise im Bereich von etwa 150 % erfährt. Während an den eingangs beschriebenen Kennzeichnungen, die durch Eindrucken in eine bereits mehr oder weniger erhärtete Kunststoffolie als kerbenförmige Vertiefungen erzeugt worden sind, störende Kerbspannungen auftreten, die zur Rißbildung führen, führt erfindungsgemäß die Produktion einer Kennzeichnung als Fließtextur zu keinerlei Beeinträchtigungen oder Festigung. - Eine für die Stretchfolie vorgegebene Dicke vorteilhafte Höhe der Fließtextur über der Oberfläche der Stretchfolie bzw. eine vorteilhafte Dicke der Fließtextur selbst kann unschwer durch Versuche ermittelt werden.

Im einzelnen bestehen im Rahmen der Erfindung mehrere Möglichkeiten der weiteren Ausbildung und Gestaltung der Stretchfolie. So kann die Kennzeichnung aus beiden Oberflächen der Stretchfolie erhaben vorstehen. Es besteht aber auch die Möglichkeit die Anordnung so zu treffen, daß die Kennzeichnung aus einer Oberfläche erhaben vorsteht und in der gegenüberliegenden Oberfläche als Vertiefung ausgeführt ist. Die Kennzeichnung kann in einer gefärbten Kunststofffolie ausgebildet sein, wobei sich die Einfärbung in Folge der Fließtextur sowohl im auffallenden als auch im durchfallenden Licht verändert und folglich die Wahrnehmbarkeit verbessert ist. Es versteht sich, daß die Kennzeichnungen in Längsrichtung der Stretchfolie vielfach wiederholt angeordnet sein kann, so daß sie sich durch die gesamte Bahn der Stretchfolie, mit der ein Gegenstand verpackt wird, gleichsam spurbildend hindurchzieht.

Gegenstand der Erfindung ist auch ein Verfahren zur Herstellung einer Stretchfolie des beschriebenen Aufbaus. Die Herstellung geschieht mit Hilfe einer Stretchfolienanlage, die eine Kunststoffschneckenpresse mit Breitschlitzdüse, eine mit Abstand von der Breitschlitzdüse angeordnete Kühlwalze und weitere Führungswalzen sowie eine Aufwickeleinrichtung aufweist. Das erfindungsgemäße Verfahren ist dadurch gekennzeichnet, daß mit-einer Kühlwalze gearbeitet wird, die der Fließtextur entsprechende rillenförmige Vertiefungen aufweist und daß der Kunststoff der aus der Breitschlitzdüse austretenden thermoplastifizierten Kunststoffbahn, die sich noch im thermoplastifizierten Zustand befindet, in die rillenförmigen Vertiefungen eingeführt wird. Im allgemeinen befindet sich die Kühlwalze in einem sehr geringen Abstand von der Mündung der Breitschlitzdüse, so daß die Kunststoffbahn noch eine verhältnismäßig geringe Viskosität aufweist, jedoch noch von ihren Oberflächenspannungen beherrscht ist.

Dann kann das Einführen des thermoplastifizierten Kunststoffes in die rillenförmigen Vertiefungen dadurch erfolgen, daß die Kunststoffbahn über die mit den rillenförmigen Vertiefungen versehene Kühlwalze lediglich hinweggeführt wird, und zwar mit der üblichen, zum Abführen erforderlichen Spannung. Hier fließt der thermoplastifizierte Kunststoff gleichsam unter dem Einfluß der Oberflächenspannung in der äußeren Oberfläche der Kunststoffbahn in die rillenförmigen Vertiefungen ein. Er kann aber in die rillenförmigen Vertiefungen auch durch ein Hilfsmittel eingedrückt werden. Herstellungstechnischbesonders einfach ist dieses, wenn der Kunststoff, der aus der Breitschlitzdüse austretenden thermoplastifizierten Kunststoffbahn in die rillenförmigen Vertiefungen durch einen Druckluftstrom eingedrückt und dadurch gleichzeitig gekühlt und eingefroren wird. Es kommt dadurch auch zu einer besonders ausgeprägten und leicht wahrnehmbaren Fließtextur.

Im folgenden wird die Erfindung anhand einer lediglich ein Ausführungsbeispiel darstellenden Zeichnung ausführlich erläutert. Es zeigen in schematischer Darstellung
- Fig. 1: eine Draufsicht auf eine erfindungsgemäße Stretchfolie, auszugsweise und ungedehnt,
- Fig. 2: den Gegenstand nach Fig. 1 im gedehnten Zustand,
- Fig. 3: in gegenüber der Fig. 1 wesentlich vergrößertem Maßstab einen Schnitt in Richtung A-A durch den Gegenstand nach Fig. 1 und
- Fig. 4: entsprechend der Fig. 3 eine andere Ausführungsform einer erfindungsgemäßen Stretchfolie.

Die in den Figuren dargestellte Stretchfolie 1 besteht aus thermoplastischem Kunststoff. Sie ist für Verpackungszwecke bestimmt. Insbesondere handelt es sich um eine Stretchfolie, die zur sogenannten Palettensicherung eingesetzt werden soll.

Die Stretchfolie 1 weist eine Kennzeichnung 2 auf, bei der Verpackung des Gegenstandes erfährt die Stretchfolie 1 eine Stretchdehnung, so daß sie den verpackten Gegenstand unter Stretchspannung umschließt.

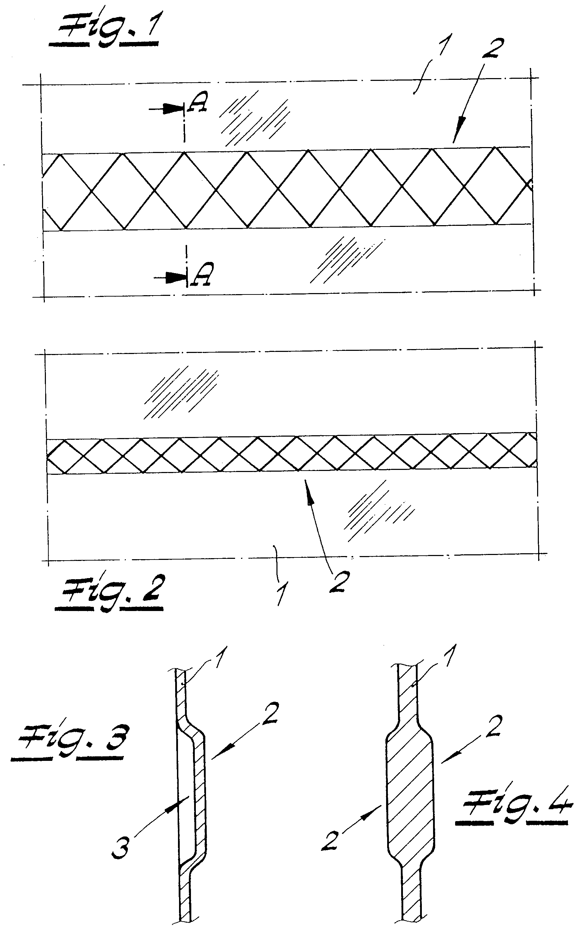

Die Kennzeichnung 2 ist im Sinne der vorstehenden Definition als Fließtextur ausgebildet, die aus zumindest einer Oberfläche der Stretchfolie erhaben vorsteht. Die Fließtextur 2 ist so eingerichtet, daß sie im stretchgedehnten Zustand der Stretchfolie 1 wahrnehmbar ist. Eine vergleichende Betrachtung der Fig. 1 und 2 läßt in Fig. 2 den stretchgedehnten Zustand erkennen.

Bei der Ausführungsform nach den Fig. 1 und 3 steht die Kennzeichnung 2 aus einer Oberfläche der Stretchfolie 1 erhaben vor, während sie auf der gegenüberliegenden Oberfläche gemeinsam als Vertiefung 3 ausgeführt ist. Sie kann aber, wie die Fig. 4 verdeutlicht, auch aus beiden Oberflächen erhaben vorstehen. Zweckmäßigerweise ist die Kennzeichnung 2 wie die Fig. 1 und 2 erkennen lassen, in Längsrichtung der Stretchfolie 1 vielfach wiederholt angeordnet.

## Patentansprüche

1. Stretchfolie aus thermoplastischem Kunststoff für Verpackungszwecke, insbesondere zur Palettensicherung,
wobei die Stretchfolie eine Kennzeichnung aufweist und bei der Verpackung eines Gegenstandes eine Stretchdehnung erfährt sowie den verpackten Gegenstand unter Stretchspannung umschließt,
dadurch gekennzeichnet, daß die Kennzeichnung (2) als Fließtextur ausgebildet ist, die aus zumindest einer Oberfläche der Stretchfolie (1) erhaben vorsteht, und daß die Fließtextur so eingerichtet ist, daß sie im stretchgedehnten Zustand der Stretchfolie (1) wahrnehmbar ist.

2. Stretchfolie nach Anspruch 1, dadurch gekennzeichnet, daß die Kennzeichnung (2) aus beiden Oberflächen erhaben vorsteht.

3. Stretchfolie nach Anspruch 1, dadurch gekennzeichnet, daß die Kennzeichnung (2) aus einer Oberfläche erhaben vorsteht und in der gegenüberliegenden Oberfläche als Vertiefung (3) ausgeführt ist.

4. Stretchfolie nach einem der Ansprüche 1 bis 3, dadurch gekennzeichnet, daß die Kennzeichnung (2) in einer gefärbten Kunststoffolie ausgebildet ist.

5. Stretchfolie nach einem der Ansprüche 1 bis 4, dadurch gekennzeichnet, daß die Kennzeichnung (2) in Längsrichtung der Stretchfolie (1) vielfach wiederholt angeordnet ist.

6. Verfahren zur Herstellung einer Stretchfolie nach einem der Ansprüche 1 bis 5 mit Hilfe einer Stretchfolienanlage, die eine Kunststoffschneckenpresse mit Breitschlitzdüse, eine mit Abstand von der Breitschlitzdüse angeordnete Kühlwalze und weitere Führungswalzen sowie eine Aufwickeleinrichtung aufweist, dadurch gekennzeichnet, daß mit einer Kühlwalze gearbeitet wird, die der Fließtextur entsprechende rillenförmige Vertiefungen aufweist, und daß der Kunststoff der aus der Breitschlitzdüse austretenden thermoplastifizierten Kunststoffbahn in die rillenförmigen Vertiefungen eingeführt wird.

7. Verfahren nach Anspruch 6, dadurch gekennzeichnet, daß der Kunststoff der thermoplastifizierten Kunststoffbahn in die rillenförmigen Vertiefungen eingedrückt wird.

8. Verfahren nach einem der Ansprüche 6 oder 7, dadurch gekennzeichnet, daß der Kunststoff der thermoplastifizierten Kunststoffbahn durch einen Druckluftstrom in die rillenförmigen Vertiefungen eingedrückt und dadurch gleichzeitig gekühlt wird.
